# EUROPEAN PATENT SPECIFICATION

(11) **EP 0 731 634 B1**
(45) Date of publication and mention of the grant of the patent: **27.05.1998**
(21) Application number: 95903661.7
(22) Date of filing: 01.12.1994
(51) Int. Cl.: A01N 1/00

(54) **ANATOMICAL AND BIOLOGICAL PRESERVATIVE AND IMPROVED EMBALMING COMPOSITION AND METHOD**
ANATOMISCHES UND BIOLOGISCHES KONSERVIERUNGSMITTEL UND VERBESSERTE EINBALSAMIERUNGSZUSAMMENSETZUNG UND -VERFAHREN
CONSERVATEUR ANATOMIQUE ET BIOLOGIQUE, COMPOSITION D'EMBAUMEMENT AMELIOREE ET PROCEDE ASSOCIE

(30) Priority: 03.12.1993 US 161893; 15.09.1994 US 306645; 15.09.1994 US 306696
(43) Date of publication of application: 18.09.1996
(73) Proprietor: EFH, INC., Houston, TX 77019 (US)
(72) Inventor: CAMPBELL, James, W., Houston, TX 77030 (US); MARGRAVE, John, L., Houston, TX 77056 (US)
(74) Representative: Goddar, Heinz J., Dr.
(86) International application number: PCT/US94/13822
(87) International publication number: WO 95/15080

(56) References cited:
- EP-A- 0 264 658
- US-A- 3 057 775
- US-A- 3 912 809
- BIOLOGICAL ABSTRACTS, vol. 89, no. 3 1990, Philadelphia, PA, US; abstract no. 33113, L.E. WINESKI ET AL. 'Phenoxyethanol as a nontoxic preservative in the dissection laboratory.'

## Description

### FIELD OF THE INVENTION

The invention relates to an anatomical and biological preservative and improved embalming compositions that are free of formaldehyde.

### BACKGROUND OF THE INVENTION

Anatomical and biological preservatives and embalming fluids typically used contain significant quantities of formaldehyde. The formaldehyde solutions used for preservation fix the tissues of the specimen and preserve the specimen from decay. Many plant and animal species are preserved for academic study. Smaller life forms are immersed in a preservative. Larger vascular animals are injected in the circulatory system and elsewhere with a preservative. Although formaldehyde solutions have historically been the preservative fluid of choice, there are a number of drawbacks. Formaldehyde is associated with certain health and environmental risks. Also, formaldehyde can cause problems with the specimen, because it dehydrates the tissue.

Alternative preservation fluids have been proposed including phenols, alcohols, and certain acid preparations. Other methods have included initially fixing the specimen in formaldehyde, rinsing the specimen and placing the specimen in another solution that does not include formaldehyde.

Human remains used for morbid anatomy study are included in the specimens needing preservation. The desire to eliminate exposure to formaldehyde has been examined by investigators involved in cadaver preservation. Wineski et al., "Phenoxyethanol as a Nontoxic Preservative in the Dissection Laboratory," Acta Anat. Vol. 136 pp. 155-158 (1989). The cadavers were embalmed by injection with about 24 liters of formaldehyde fluids. After embalming the cadavers were immersed or completely wrapped with cloth heavily soaked in phenoxyethanol. Exposure of workers to phenoxyethanol is preferable environmentally to formaldehyde. However, the success of the technique depended on good initial preparation of the cadavers with a formaldehyde fluid.

Other alternatives to formaldehyde include a formulation made with a 1,4-dioxane ring compound, U.S. Patent No. 3,264,182; a process of pre-fixation with formaldehyde followed by preservation in glycols, U.S. Patent No. 3,573,082; and solutions of starch glycerite for marine animals to preserve color, U.S. Patent No. 4,121,944.

The formaldehyde embalming solutions are injected into the arteries and also introduced into the body cavity. Generally the cavity formulation is more concentrated because the naturally occurring fluids in the body cavity will dilute the formaldehyde formulation. The formaldehyde solutions also typically contain other additives such as humectants. Although formaldehyde solutions have historically been the embalming fluids of choice, there are a number of drawbacks as discussed above for biological preservatives. Formaldehyde can cause problems with the presentation of the body, because it dehydrates the tissue.

In U.S. Patent No. 3,057,775 issued October 9, 1962 to Randow entitled "Embalming Composition"_{,} glutaraldehyde was used instead of formaldehyde as a preservative in the embalming fluid. Glutaraldehyde was mixed with other preservatives in the formulations disclosed. If glutaraldehyde were used as the sole preservative, it would not be less than 7% of the solution. However, glutaraldehyde should be stabilized in the fluid to prevent oxidation and may polymerize in certain concentrations. Glutaraldehyde is tolerable to handle and does not have a noxious odor. Also, glutaraldehyde does not dehydrate tissue.

U.S. Patent No. 3,912,809 issued on October 14, 1975 to Randow entitled "Disinfecting Embalming Composition", discloses a fluid that is 2% by weight glutaraldehyde and an alkalizing agent to adjust the pH of the solution to pH 8 ∼ 8.5. The glutaraldehyde is not stable in the alkalizing solution for more than a few weeks and the disclosure recognizes the problem of polymerization when glutaraldehyde is present in large concentrations. According to the patent, the shelf life problem is resolved by initially preparing two solutions. One is the glutaraldehyde solution which typically also includes formaldehyde and the other is the alkalizing solution. The two solutions are mixed as needed. This composition is reported to significantly reduce the microbial growth in human remains.

A need exists for a preservative and embalming fluid that is safe to handle and is relatively simple to prepare for use. Previous alternatives to formaldehyde fluids have been solutions with stability problems associated with higher levels of glutaraldehyde or were cumbersome to use.

### SUMMARY OF THE INVENTION

A new anatomical and preservative fluid and embalming composition has been developed. The preservative is capable for use for specimens that are immersed or injected with the fluid into the vascular system. The fluid is a mixture of glutaraldehyde, at least one aromatic ether of ethanol preferably phenoxyethanol, at least one alcohol, and a humectant. The composition may be prepared initially as a concentrate or diluted with water to the desired concentration. The fluid may contain various additives conventionally used in preservatives, including a color additive, pH buffer, an antioxidant, odorant and mixtures thereof. A biocide may also be added for additional cidal activity in addition to the fluid components to kill mold and other microbes when the specimen is going to be used for a prolonged time. The fluid exhibits excellent cidal activity for microbes such as viruses.

### DETAILED DESCRIPTION OF THE INVENTION

The improved preservation and embalming fluid of the present invention is a unique mixture of glutaraldehyde, at least one aromatic ether of ethanol, at least one humectant, and at least one alcohol. Generally, the fluid is diluted with water prior to use. The fluid can be prepared in dilutions appropriate for whole specimen preservative and vascular injection for biological studies. The fluid can be used for embalming including arterial injection and cavity fluid.

The preferred formulation includes the following components by volume after dilution: glutaraldehyde from about 0.5% to about 3.5%, aromatic ether of ethanol preferably phenoxyethanol from about 1% to about 3%, humectant from about 1% to about 9%, and an alcohol from about 27% to about 37%; and made up with water to the desired concentration. A preferred humectant is a polyhydric alcohol or mixtures of more than one polyhydric alcohol. The preferred polyhydric alcohols are glycerol and 1,2 propane-diol. Another polyhydric alcohol humectant is hexylene glycol. A preferred aromatic ether of ethanol is phenoxyethanol. The preferred components are not intended to limit the scope of the inventions and alternative components within the scope of the invention will be recognized by those skilled in the art.

The following Example 1 is an illustration of the improved composition that can be used for specimen preservation.

### EXAMPLE 1

| Components | Percent by Volume |
|---|---|
| Ethyl Alcohol | 33% |
| Glutaraldehyde | 3% |
| 1-2 Propanediol | 0.7% |
| Phenoxyethanol | 2% |
| Glycerol | 3% |

The rest of the volume is made up with water. In addition, ethoxyethanol in the range of 0.5% to 0.9% by volume may be added to Example 1. Dimethyl sulfoxide may also be used preferably in the range of 0.5% to 1.0%. Ethanol is a preferred alcohol. Small amounts of isopropanol, methanol or mixtures thereof can be used as a denaturant or otherwise in the formulation.

In addition to the components in Example 1, a pH buffer preferably sodium phosphate and/or anti-oxidant may be included to maintain the stability of the glutaraldehyde. The pH buffer would adjust the pH in the range of pH∼7 to pH∼9 with the preferred range of pH 8.0 - 8.1. Also, a biocide may be added to further deter microbial growth. In addition, other additives conventionally used in preservation fluids such as color additives may be included. Color additives are used in vascular systems of biological specimens for identification. It is not intended to limit the claimed formulation to exclude additives known to be used in preservation compositions that would be compatible with the formulation of the present invention.

The improved composition includes glutaraldehyde in relatively small concentrations. Anatomical tissues treated with this fluid have exhibited good color retention in muscle tissue of cadavers. The specimens have no odor and are easy to work with. The more glutaraldehyde is used in the formulation the more rigid the joints will be of specimens with a skeletal structure.

The following Examples 2 and 3 are illustrations of the improved embalming composition for use in arterial injection. The volume in addition to the components is made up with water in both examples.

### EXAMPLE 2

| Components | Percent by Volume |
|---|---|
| Ethyl Alcohol | 28.5% |
| Glutaraldehyde | 0.5% |
| 1-2 Propanediol | 1.24% |
| Phenoxyethanol | 1.47% |
| Glycerol | 5% |

The fluid in Example 2 has been used in human remains. The composition preserved the body for at least seven to ten days.

### EXAMPLE 3

| Components | Percent by Volume |
|---|---|
| Ethyl Alcohol | 29.5% |
| Isopropanol | 1.5% |
| Glycerol | 1.3% |
| Glutaraldehyde | 3.2% |
| Phenoxyethanol | 2.2% |
| Ethoxyethanol | 0.8% |
| Propanediol | 0.6% |
| Sodium Phosphate buffer added to adjust to pH 8.0-8.1 | |

In addition to the components in Example 2, a pH buffer and/or anti-oxidant may be included to maintain the stability of the glutaraldehyde. The pH buffer would adjust the pH in the range of pH∼7 to pH∼9. Also, a biocide may be added to further deter microbial growth. For instance, a bactericide or a viricide may be included such as benzalkonium chloride or other quaternary ammonium compounds. In addition, other additives conventionally used in embalming fluids such as color additives or an odorant such as perfume may be included.

In Example 3 the isopropanol is added as one of the alcohols and also serves as a denaturant. Methanol can also be used in small quantities as a denaturant. After 9 days at room temperature bodies prepared with Example 3 exhibited no visible signs of dehydration. After 9 days a body prepared with Example 3 was put in a cooler and autopsied two weeks from the date of embalming. The tissue was preserved exceptionally well with the muscle maintaining the same color. The body did not have an odor.

It is not intended to limit the claimed formulation to exclude additives known to be used in embalming compositions that would be compatible with the formulation of the present invention.

The formulation of this invention may be used as a cavity fluid for embalming internal organs. One cavity formulation is prepared according to Example 4.

### EXAMPLE 4

| Components | Percent by Volume |
|---|---|
| Ethyl Alcohol | 35.63% |
| Glutaraldehyde | 1.13% |
| Phenoxyethanol | 2.45% |
| Glycerol | 5% |
| Ethoxyethanol | 0.9% |
| 1-2 Propanediol | 2.48% |

The fluid may also include dimethyl sulfoxide (DMSO) in about 0.5% to about 1% by volume of the fluid. The DMSO may be a more preferred additive to a cavity fluid.

The formulation in Example 5 below is another composition for a cavity fluid.

### EXAMPLE 5

| Components | Percent by Volume |
|---|---|
| Ethyl Alcohol | 31.4% |
| Isopropanol | 1.7% |
| Glycerol | 2.5% |
| Phenoxyethanol | 1.2% |
| Glutaraldehyde | 3.0% |
| Propanediol | 1.2% |
| Ethoxyethanol | 0.7% |
| Sodium Phosphate buffer added to adjust to pH 8.0-8.1 | |

The formulation in Example 6 below is another alternative composition for a cavity fluid.

### EXAMPLE 6

| Components | Percent by Volume |
|---|---|
| Ethyl Alcohol | 31.4% |
| Isopropanol | 1.7% |
| Glycerol | 2.5% |
| Phenoxyethanol | 1.2% |
| Glutaraldehyde | 3.5% |
| Propanediol | 1.2% |
| Ethoxyethanol | 0.7% |
| Sodium Phosphate buffer added to adjust to pH 8.0-8.1 | |

The embalming method of the present invention utilizes the new fluid described above. Typically, the fluid is injected by arterial delivery into the subject and allowed to penetrate the tissue. The fluid and method of this invention exhibits excellent penetration and delivery characteristics as compared to formaldehyde based fluids. Also, discolorations caused by hematomas and other conditions were lessened when the deceased was embalmed using the improved fluid of the present invention. The improved fluid also relieves blood clots which can impair the preservation of the body. This is particularly important if the embalming process is delayed after death and blood clots form prior to injection of the fluid. The fluid of the present invention appears to break up the blood clots and improve delivery of the fluid through the arteries. The formaldehyde fluids do not exhibit alleviation of discoloration or break up blood clots as compared to the fluid and method of the improved embalming composition described herein.

Generally, the arterial fluid is made up of a less concentrated solution within the Prescribed ranges. The cavity fluid is introduced into the central body cavity of the deceased, and this fluid is generally more concentrated within the ranges. The glutaraldehyde component in the present fluid is a relatively small concentration at levels not susceptible to polymerization. Also, the improved fluid is stable and does not require multiple mixing steps with more than one solution. The same solution may be diluted as desired for use as an arterial or cavity fluid.

## Claims

1. A preservative and embalming fluid comprising
glutaraldehyde;
at least one aromatic ether of ethanol;
at least one alcohol; and
at least one humectant.

2. A preservative and embalming fluid of claim 1 wherein said aromatic ether of ethanol is phenoxyethanol.

3. A preservative and embalming fluid of claim 1 wherein said alcohol is ethanol.

4. A preservative and embalming fluid of claim 1 wherein said humectant is selected from the group consisting of a polyhydric alcohol or mixtures thereof.

5. A preservative and embalming fluid of claim 1 which further comprises ethoxyethanol.

6. A preservative and embalming fluid of claim 5 wherein said ethoxyethanol is from 0.5 % to 0.9 % by volume of the fluid.

7. A preservative and embalming fluid of claim 1 wherein said glutaraldehyde is from 0.5 to 3.5 % by volume of the fluid.

8. A preservative and embalming fluid of claim 1 wherein said aromatic ether of ethanol is from 0.5 % to 0.9 % by volume of the fluid.

9. A preservative and embalming fluid of claim 1 wherein said alcohol is from 27 % to 37 % by volume of the fluid.

10. A preservative and embalming fluid of claim 1 wherein humectant is from 1 % to 9 % by volume of the fluid.

11. A preservative and embalming fluid of claim 1 additionally comprising a color additive.

12. A preservative and embalming fluid of claim 1 additionally comprising a pH buffer.

13. A preservative and embalming fluid of claim 1 additionally comprising an antioxidant.

14. A preservative and embalming fluid of claim 1 additionally comprising a biocide.

15. A preservative and embalming fluid of claim 5 additionally comprising a perfume additive.

16. A preservative and embalming fluid of claim 3 additionally comprising one of the group consisting of isopropanol, methanol and mixtures thereof.

17. A preservative and embalming fluid of claim 4, wherein said polyhydric alcohol is selected from the group consisting essentially of glycerol, 1-2-propanediol, hexylene glycol and mixtures thereof.

18. A method of embalming comprising:
preparing a fluid according to claim 1;
diluting the fluid with water to obtain fluid volumes for the components in the range of claims 7, 8, 9 and 10; and
introducing the fluid into a body.

19. A method of claim 18 wherein said introduction is arterial injection.

20. A method of claim 18 wherein said introduction is into the body cavity.

21. A method of preserving a biological specimen comprising:
preparing a fluid according to claim 1;
diluting the fluid with water to obtain fluid volumes for the components in the range of claims 7, 8, 9 and 10; and
introducing a specimen into the fluid.

22. A method of preserving a biological specimen comprising:
preparing a fluid according to claim 1;
diluting the fluid with water to obtain fluid volumes for the components in the range of claims 7, 8, 9 and 10; and
introducing the fluid into the vascular system of the specimen.

## Patentansprüche

1. Konservierungsmittel und Einbalsamierungsflüssigkeit umfassend
Glutaraldehyd;
wenigstens einen aromatischen Ether von Ethanol;
wenigstens einen Alkohol; und
Wenigstens ein Benetzungsmittel.

2. Konservierungsmittel und Einbalsamierungsflüssigkeit nach Anspruch 1, wobei der aromatische Ether von Alkohol Phenoxyethanol ist.

3. Konservierungsmittel und Einbalsamierungsflüssigkeit nach Anspruch 1, wobei der Alkohol Ethanol ist.

4. Konservierungsmittel und Einbalsamierungsflüssigkeit nach Anspruch 1, wobei das Benetzungsmittel ausgewählt ist aus der Gruppe, die einen mehrwertigen Alkohol oder Mischungen davon umfaßt.

5. Konservierungsmittel und Einbalsamierungsflüssigkeit nach Anspruch 1, das weiter Ethoxyethanol umfaßt.

6. Konservierungsmittel und Einbalsamierungsflüssigkeit nach Anspruch 5, wobei das Ethoxyethanol von 0,5 Vol.-% bis 0,9 Vol.-% der Flüssigkeit ausmacht.

7. Konservierungsmittel und Einbalsamierungsflüssigkeit nach Anspruch 1, wobei das Glutaraldehyd von 0,5 bis 3,5 Vol.-% der Flüssigkeit ausmacht.

8. Konservierungsmittel und Einbalsamierungsflüssigkeit nach Anspruch 1, wobei der aromatische Ether von Ethanol von 0,5 Vol.-% bis 0,9 Vol.-% der Flüssigkeit ausmacht.

9. Konservierungsmittel und Einbalsamierungsflüssigkeit nach Anspruch 1, wobei der Alkohol von 27 Vol.-% bis 37 Vol.-% der Flüssigkeit ausmacht.

10. Konservierungsmittel und Einbalsamierungsflüssigkeit nach Anspruch 1, wobei das Benetzungsmittel von etwa 1 Vol.-% bis etwa 9 Vol.-% Flüssigkeit ausmacht.

11. Konservierungsmittel und Einbalsamierungsflüssigkeit nach Anspruch 1 zusätzlich ein Farbstoffadditiv umfassend.

12. Konservierungsmittel und Einbalsamierungsflüssigkeit nach Anspruch 1 zusätzlich einen pH-Puffer umfassend.

13. Konservierungsmittel und Einbalsamierungsflüssigkeit nach Anspruch 1 zusätzlich ein Antioxidans umfassend.

14. Konservierungsmittel und Einbalsamierungsflüssigkeit nach Anspruch 1 zusätzlich umfassend ein Biozid.

15. Konservierungsmittel und Einbalsamierungsflüssigkeit nach Anspruch 5 zusätzlich umfassend ein Parfümadditiv.

16. Konservierungsmittel und Einbalsamierungsflüssigkeit nach Anspruch 3 zusätzlich umfassend einen aus der Gruppe, die Isopropanol, Methanol und Mischungen davon umfaßt.

17. Konservierungsmittel und Einbalsamierungsflüssigkeit nach Anspruch 4, wobei der mehrwertige Alkohol ausgewählt ist aus der Gruppe, die im wesentlichen Glycerin, 1-2-Propandiol, Hexylenglykol und Mischungen davon umfaßt.

18. Verfahren zum Einbalsamieren, umfassend:
Herstellen einer Flüssigkeit gemäß Anspruch 1;
Verdünnen der Flüssigkeit mit Wasser, um Flüssigkeitsvolumina für die Komponenten im Bereich der Ansprüche 7, 8, 9 und 10 zu erhalten; und
Einführen der Flüssigkeit in einen Körper.

19. Verfahren nach Anspruch 18, wobei die Einführung arterielle Injektion ist.

20. Verfahren nach Anspruch 18, wobei Einführung in die Körperhöhle erfolgt.

21. Verfahren zum Konservieren einer biologischen Probe, umfassend:
Herstellen einer Flüssigkeit nach Anspruch 1;
Verdünnen der Flüssigkeit mit Wasser, um Flüssigkeitsvolumina für die Komponenten im Bereich der Ansprüche 7, 8, 9 und 10 zu erhalten; und
Einführen einer Probe in die Flüssigkeit.

22. Verfahren zum Konservieren einer biologischen Probe umfassend:
Herstellen einer Flüssigkeit nach Anspruch 1;
Verdünnen der Flüssigkeit mit Wasser, um Flüssigkeitsvolumina für die Komponenten im Bereich der Ansprüche 7, 8, 9 und 10 zu erhalten; und
Einführen der Flüssigkeit in das Vaskularsystem der Probe.

## Revendications

1. Conservateur et fluide d'embaumement comprenant du glutaraldéhyde;
au moins un éther aromatique de l'éthanol;
au moins un alcool; et
au moins un humédifiant.

2. Conservateur et fluide d'embaumement selon la revendication 1, dans lequel cet éther aromatique de l'éthanol est le phenoxyéthanol.

3. Conservateur et fluide d'embaumement selon la revendication 1, dans lequel cet alcool est l'éthanol.

4. Conservateur et fluide d'embaumement selon la revendication 1, dans lequel cet humidifiant est choisi dans le groupe constitué d'un polyalcool ou de mélanges de ceux-ci.

5. Conservateur et fluide d'embaumement selon la revendication 1, qui comprend en outre de l'éthoxyéthanol.

6. Conservateur et fluide d'embaumement selon la revendication 1, dans lequel cet éthoxyéthanol constitue de 0,5 % à 0,9 % en volume du fluide.

7. Conservateur et fluide d'embaumement selon la revendication 1, dans lequel ce glutaraldéhyde constitue de 0,5 à 3,5 % en volume du fluide.

8. Conservateur et fluide d'embaumement selon la revendication 1, dans lequel cet éther aromatique de l'éthanol constitue de 0,5 % à 0,9 % du fluide.

9. Conservateur et fluide d'embaumement selon la revendication 1, dans lequel cet alcool constitue de 27 % à 37 % en volume du fluide.

10. Conservateur et fluide d'embaumement selon la revendication 1, dans lequel l'humidifiant constitue environ 1 % à environ 9 % en volume du fluide.

11. Conservateur et fluide d'embaumement selon la revendication 1, comprenant en outre un additif de couleur.

12. Conservateur et fluide d'embaumement selon la revendication 1, comprenant en outre un tampon.

13. Conservateur et fluide d'embaumement selon la revendication 1, comprenant en outre un anti-oxydant.

14. Conservateur et fluide d'embaumement selon la revendication 1, comprenant en outre un biocide.

15. Conservateur et fluide d'embaumement selon la revendication 5, comprenant en outre un additif de parfum.

16. Conservateur et fluide d'embaumement selon la revendication 3, comprenant en outre un composé choisi dans le groupe constitué de l'isopropanol, du méthanol et de mélanges de ceux-ci.

17. Conservateur et fluide d'embaumement selon la revendication 4, dans lequel ce polyalcool est choisi dans le groupe essentiellement constitué du glycéral, du 1,2-propanediol, de l'hexylène glycol et de mélanges de ceux-ci.

18. Procédé d'embaumement comprenant :
le fait de préparer un fluide selon la revendication 1;
le fait de diluer le fluide avec de l'eau pour obtenir des volumes de fluide pour les constituants dans l'intervalle des revendications 7, 8, 9 et 10; et
le fait d'introduire le fluide dans un corps.

19. Procédé selon la revendication 18, dans lequel cette introduction est une injection artérielle.

20. Procédé selon la revendication 18, dans lequel cette introduction s'effectue dans une cavité corporelle.

21. Procédé de conservation d'un échantillon biologique comprenant :
le fait de préparer un fluide selon la revendication 1;
le fait de diluer le fluide avec de l'eau pour obtenir des volumes de fluide pour les constituants dans l'intervalle des revendications 7, 8, 9 et 10; et
le fait d'introduire un échantillon dans le fluide.

22. Procédé de conservation d'un échantillon biologique comprenant :
le fait de préparer un fluide selon la revendication 1;
le fait de diluer le fluide avec de l'eau pour obtenir des volumes de fluide pour les constituants dans l'intervalle des revendications 7, 8, 9 et 10,; et
le fait d'introduire le fluide dans le système vasculaire de l'échantillon.
